Europäisches Patentamt

(19) European Patent Office

Office européen des brevets

(11) Publication number : **0 357 618 B1**

# EUROPEAN PATENT SPECIFICATION

(45) Date of publication of patent specification :
07.10.92 Bulletin 92/41

(51) Int. Cl.⁵ : **H04L 12/56**

(21) Application number : **88902469.1**

(22) Date of filing : **11.03.88**

(86) International application number :
**PCT/EP88/00212**

(87) International publication number :
**WO 88/07298 22.09.88 Gazette 88/21**

(54) SWITCHING SYSTEM.

(30) Priority : **18.03.87 BE 8700283**

(43) Date of publication of application :
**14.03.90 Bulletin 90/11**

(45) Publication of the grant of the patent :
**07.10.92 Bulletin 92/41**

(84) Designated Contracting States :
**BE CH IT LI**

(56) References cited :
EP-A- 0 020 255
EP-A- 0 113 639
WO-A-85/04776
BE-A- 904 100
Patent Abstracts of Japan, vol. 9, no. 181
(E-331)(1904), 26 July 1985 & JP-A-6 052 195
IEEE Global Telecommunications Conference,
Houston, TX, 1-4 December 1986, Conference
Record, volume 2 of 3, IEEE (US), K.Y.Eng et
al.: "A decoupled approach for fast TDM as-
signment in constrained hierarchical switch-
ing systems", pages 650-654

(56) References cited :
Transactions of the I.E.C.E. of Japan, vol. E69,
no. 7, July 1986, (Tokyo, JP), S.H. Purba et al.:
"A VLSI switch for adigital PBX", pages
771-774
IEEE Transactions on Communications, vol.
COM-34, no. 9, September 1986, IEEE (New
York, US), Y. Yamamoto et al.: "A novelcon-
cept for high-speed time switch approaching
memory read cycle limit", pages 953-955

(73) Proprietor : **BELL TELEPHONE
MANUFACTURING COMPANY Naamloze
Vennootschap
Francis Wellesplein 1
B-2018 Antwerp (BE)**
(84) **BE**
Proprietor : **Alcatel N.V.
Strawinskylaan 537 (World Trade Center)
NL-1077 XX Amsterdam (NL)**
(84) **CH IT LI**

(72) Inventor : **DEBUYSSCHER, Pierre, Leon
Nieuwstraat 35
B-9730 Nazareth (BE)**

(74) Representative : **Vermeersch, Robert et al
BELL TELEPHONE MANUFACTURING
COMPANY Naamloze Vennootschap Patent
Department Francis Wellesplein 1
B-2018 Antwerpen (BE)**

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

## Description

The present invention relates to a switching system including
- a plurality of input terminals connected to receiver means able to receive packets of digital signals therefrom and to divide each of said packets into a plurality of sub-packets;
- control means to which at least one sub-packet of each of said packets and containing routing information is applied;
- a plurality of memories allocated to respective sub-packets of each of said packets, said sub-packets being loaded into and unloaded from said memories under the control of said control means;
- transmitter means which are connected to a plurality of output terminals and to which said unloaded sub-packets are supplied, said transmitter means being able to rebuild a packet from its sub-packets and to transmit said rebuilt packet to at least one terminal indicated by said routing information.

Such a switching system enabling to use lower speed circuits working in parallel on each sub-packet, is already known in the art, e.g. from the published French patent application No 2538976 and from the article "Réseaux de transfert en vidéocommunication - La commutation de paquets" by M. Servel and A. Thomas published in "L'écho des RECHERCHES", No 115, lst quarter 1984, pages 33 to 40. In this system a counter forming part of the control means generates a write pointer which is identical for each memory and indicates the location wherein an incoming sub-packet has to be loaded. This write pointer is increased at the rhythm of a time base also forming part of the control means. As a result, homologous sub-packets of the incoming packets are loaded sequentially in the corresponding memories. The control means also include a plurality of queues, one for each output terminal, containing the addresses of the memory locations wherein sub-packets intended for the corresponding output terminal are loaded, the latter being available to the control means from the routing information. To output the sub-packets, each of these queues is read sequentially, and the contents of the addressed locations in the memories are transmitted to the transmitter means and so further to the intended output terminals.

A possible drawback of this known system is that if sub-packets would not be read sufficiently fast, they would be overwritten the next time the write pointer addresses the location containing them. As a consequence not only the previously stored sub-packets of a packet would be lost, but moreover when later on their address is read from the queue wrong sub-packets, i.e. those then present in that memory location, would be sent to the corresponding output terminal.

This may impose f.i. restrictions on the allowable traffic on any output terminal in function of the maximum possible reading speed.

The invention is based on the insight that it is possible to provide a system of the above type but without imposing such speed requirements while permitting the use of simpler control means.

This is achieved due the fact that each of said memories is subdivided into a plurality of storage areas allocated to respective ones of said output terminals and that said control means, under the control of said routing information, load the sub-packets of a packet to be transmitted to said indicated output terminal into the storage areas allocated thereto.

In this way, each output terminal having its allocated storage area, contrary to the case outlined above the sub-packets intended for a particular output terminal can never be wrongly routed. Furthermore, the control means require no queues for storing the addresses of the sub-packets in the memories so that they are relatively simple.

Another characteristic feature of the present invention is that said receiver means include a plurality of receiver circuits to which a respective input terminal is connected and which are each able to divide a packet received from said connected input terminal into said plurality of sub-packets.

In this way, a fault in a receiver circuit only affects the packets routed through this receiver circuit and not the transmission of other packets.

The above mentioned and other objects and features of the invention will become more apparent and the invention itself will be best understood by referring to the following description of an embodiment taken in conjunction with the accompanying drawing in which :

Fig. 1 represents a switching system SW according to the invention; and

Fig. 2 represents the control circuit CC1 of Fig. 1 in more detail.

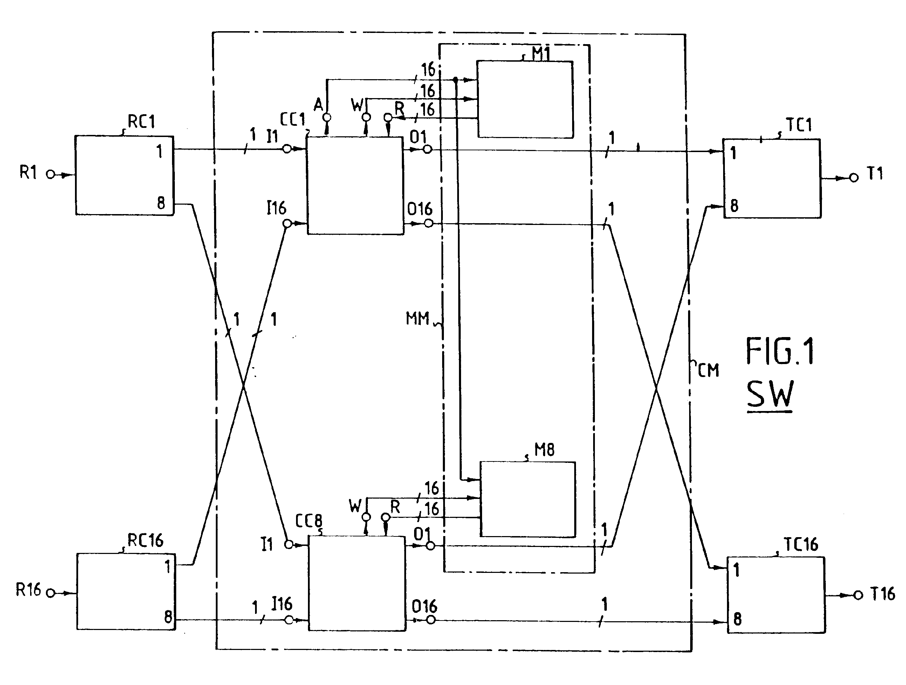

A plurality of switching systems SW such as the one shown in Fig. 1 are for instance interconnected to constitute the switching network of a telecommunication system of the type generally known as Broadband Integrated Services Data Network (B-ISDN) to which user stations are coupled via Asynchronous Time Division (ATD) transmission links. The bitrate at which the signals are transferred on these transmission links may be freely chosen with a maximum value of about 560 Megabits/second. These signals may be voice, computer data or video and are transmitted through the switching systems SW of the switching network under the form of packets of digital signals. Each packet has a fixed length of, e.g. 8 x 16 = 128 bits, and comprises a header and data.

The switching system SW has 16 input terminals R1 to R16 and 16 output terminals T1 to T16 of which only the first R1/T1 and the last R16/T16 ones are shown in Fig. 1, and includes control means CM mainly adapted to control the transfer packets of digital signals supplied to any of the input terminals R1/R16 to one or more (in case of broadcasting) of the output terminals T1 to T16 according to routing information contained in the header of these packets. Each input terminal R1/R16 is coupled to the control means CM via a respective receiver circuit RC1/RC16, whilst these control means CM are themselves coupled to the output terminals T1 to T16 via respective transmitter circuits TC1 to TC16.

More particularly, each receiver circuit RC1/RC16 includes a synchronization circuit to perform packet synchronization or frame alignment of the incoming bit stream, an input queue to temporarily store the incoming packets prior to sending them to the control means CM, a processor to control the operation of the different parts of this receiver circuit, and a routing table to interpret the received routing information in order to separate control packets intended for the processor of the receiver circuit from data packets intended for a transmitter circuit TC1/TC16. When the routing information included in the header of a packet does not explicitly contain the address of a transmitter circuit TC1/TC16, the routing table is able to translate this information into this address. All these parts of the receiver circuits RC1 to RC16 are described in more detail in the above mentioned Belgian patent No 9O4.1OO and are therefore not shown in Fig. 1.

Each receiver circuit RC1/RC16 further includes a circuit (not shown) to split up each incoming packet into 8 sub-packets of equal length, e. g. 16 bits, which are applied to 8 distinct control circuits CC1 to CC8 forming part of the control means CM and of which only the first CC1 and the last CC8 ones are shown in Fig. 1. This transfer of sub-packets is done via 8 input lines each linking a receiver circuit RC1/RC16 to the 8 control circuits CC1 to CC8 via respective terminals I1/I16 thereof. In other words, each control circuit CC1/CC8 is connected to the 16 receiver circuits RC1 to RC16 via its terminals I1 to I16 through which it can receive the incoming sub-packets at a reduced bitrate, e.g. 56O / 8 = 7O Megabits/second.

The control circuits CC1 to CC8 are connected to a memory MM which is subdivided into 8 sub-memories M1 to M8 of equal sizes. Each control circuit CC1/CC8 is only connected to one corresponding sub-memory M1/M8 by 16 write lines to load sub-packets therein via a write terminal W and by 16 read lines to unload sub-packets therefrom via a read terminal R. Additionally, the control circuit CC1 has an address terminal A which is connected in parallel to all the sub-memories M1 to M8 via 16 address lines to indicate to these sub-memories where the sub-packets transferred through the write or read lines of the 8 control circuits have to be loaded or unloaded respectively. In practice, each sub-memory M1/M8 is subdivided into 16 identical storage areas each allocated to distinct transmitter circuits TC1/TC16.

Finally, each control circuit CC1/CC8 is also connected to these 16 transmitter circuits TC1 to TC16 by 16 output lines via respective terminals O1/O16 through which the sub-packets unloaded from the sub-memories M1 to M8 are transferred to the destination transmitter circuit TC1/TC16.

In each transmitter circuit TC1/TC16 the 8 sub-packets received from the 8 different control circuits CC1 to CC8 are concatenated to rebuild the original packets of digital signals prior to transferring them further via its output terminal T1/T16.

The digital signals are unloaded from the sub-memories M1 to M8 of the memory MM at a speed which is proportional to the bitrate at which the packets are transmitted via the output terminals T1 to T16 to the devices connected to these terminals.

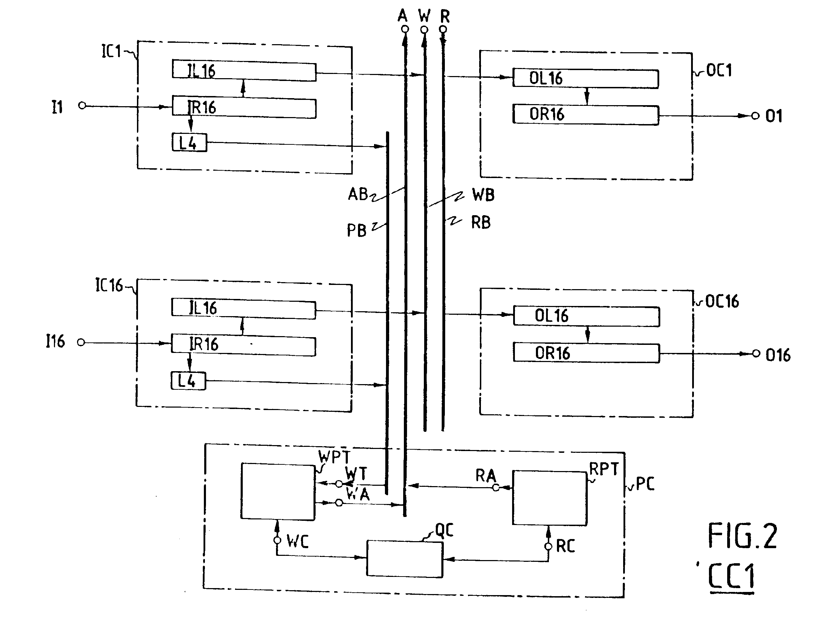

The control circuit CC1 is represented in Fig. 2 wherein only the first I1/O1 and the last I16/O16 of its input and output terminals respectively and the circuits associated thereto are shown. It includes a 16-bit address bus AB, a 16-bit write bus WB, a 16-bit read bus RB and a 4-bit pointer bus PB to transfer digital signals and of which AB, WB and RB are connected to the respective terminals A, W and R mentioned above, whilst PB is an internal bus to transfer relative addresses of transmitter circuits TC1/TC16 as will be described below. The terminals I1 to I16 of the control circuit CC1 are coupled to the busses WB and PB via respective input circuits IC1 to IC16, whilst the bus RB is coupled to the terminals O1 to O16 of CC1 via output circuits OC1 to OC16. Each input circuit IC1/IC16 includes a 16-bit shift register IR16 to which the corresponding input terminal I1/I16 is connected and which is able to store the sub-packets incoming from the corresponding receiver circuit RC1/RC16. When the shift register IR16 is full, the sub-packet stored therein is transferred to a 16-bit latch circuit IL16 also included in each input circuit IC1/IC16. This sub-packet remains in the latch circuit IL16 until the write bus WB is ready to transfer it to the sub-memory M1 wherein it will be loaded at a location indicated by the data then present on the pointer bus Pb. These latter data are obtained in the following way. The first 4 bits of the sub-packet stored in the shift register IR16 are also transferred to a 4-bit latch circuit L4 also forming part of each input circuit IC1/IC16. From there, these 4 bits are transferred to a pointer control circuit PC included in CC1 and more particularly to a write pointer table WPT thereof via a terminal WT. In fact, these 4 bits form part of the routing information of the packet and identify the relative address 1 to 16 of the transmitter circuit TC1 to TC16 to which this sub-packet and thus also the whole packet is intended. The write pointer table WPT contains for each of the 16 storage areas of the sub-memory M1 a write pointer indicating the address of the next free location in that storage area, i.e. where the sub-packet should be loaded. When, for instance, 4,O96 (4K) sub-packets can be loaded in each of the 16 storage areas of the sub-memory M1, the complete address of a free location of the sub-memory M1 can be given by 16 bits. The first 4 bits indicate the number 1 to 16 of the storage area of the sub-memory M1 allocated to the destination transmitter circuit TC1/TC16, i.e. the relative address 1 to 16 of this transmitter circuit, whilst the 12 remaining bits indicate the next free location 1 to 4,O96 (4K) in this storage area wherein the 16-bit sub-packet can be stored. This 16-bit address is then transmitted to the address bus AB via a terminal WA of the write pointer table WPT and so to the 16 address lines via the address terminal A of the control circuit CC1. This address is then indicated simultaneously to the 8 sub-memories M1 to M8 which are handled in parallel and wherein the sub-packets coming from the 8 control circuits CC1 to CC8 are thus loaded in homologous locations.

In practice, the contents of the 4-bit latch circuits L4 of the 16 input circuits IC1 to IC16 are successively transferred to the write pointer table WPT via the pointer bus PB and the terminal WT. As mentioned above, a 16-bit corresponding address is then generated by the write pointer table WPT, is loaded on the address bus AB and appears on the address terminal A of the control circuit CC1. At the same moment, the contents of the latch circuits IL16 of the corresponding input circuits IC1/IC16 of the 8 control circuits CC1 to CC8 are loaded on the write bus WB thereof and appear at their write terminals W. The 8 sub-packets are then transferred to the corresponding sub-memories M1 to M8 at homologous locations.

In synchronism with the bitrate at which the packets are transmitted further by the transmitter circuits TC1 to TC16 through their respective output terminals T1 to T16, the sub-memories M1 to M8 are unloaded by the control circuits CC1 to CC8. This unloading operation of the sub-memories M1 to M8 is performed under the control of a read pointer table RPT included in the pointer control circuit PC of the control circuit CC1. The read pointer table RPT contains for each transmitter circuit TC1/TC16 a read pointer indicating for the corresponding storage area the location of the sub-packet to be unloaded. As for the write operation of the sub-packets in the memory MM, all the sub-memories M1 to M8 are handled in parallel owing to their simultaneous addressing through the 16 address lines connected to the address terminal A of the control circuit CC1. In practice, the read pointer table RPT loads successively for each transmitter circuit TC1/TC16 a 16-bit address on the address bus AB via a terminal RA. This 16-bit address, obtained in a similar way as the one mentioned above, is transferred to all the sub-memories M1 to M8 via the address terminal A of the control circuit CC1. At that moment, the sub-packets contained in the sub-memories M1 to M8 are transferred through the 16 read lines connected to the read terminals R of the corresponding control circuits CC1 to CC8 and so on their respective read busses RB. The sub-packets are then transferred to the output circuits OC1/OC16 corresponding to the selected transmitter circuit TC1/TC16. More particularly, each sub-packet is loaded in a 16-bit latch circuit OL16 included in each output circuit OC1/OC16 of each control circuit CC1 to CC8. From this 16-bit latch circuit OL16, the sub-packet is transferred to a 16-bit shift register OR16 also included in the output circuits OC1 to OC16 and from which it is sent to the destination transmitter circuit TC1/TC16 via the corresponding terminal O1/O16.

The pointer control circuit PC of the control circuit CC1 further includes a queue control circuit QC coupled to the write pointer table WPT via a terminal WC and to the read pointer table RPT via a terminal RC. The purpose of this queue control circuit QC is to compare the values of the write pointer and of the read pointer of each storage area of the sub-memory M1 and thus in this way of the sub-memories M2 to M8 in order to detect empty or full storage areas and to take the appropriate decisions. For instance, in case of an empty storage area corresponding to a particular transmitter circuit TC1/TC16, a so-called synchronization packet may be generated and transferred to this circuit.

It is to be noted that, since the 16-bit write and read addresses are identical for the 8 sub-memories M1 to M8 and are generated by the control circuit CC1, the 4-bit latch circuit L4 of the input circuits IC1 to IC16, the pointer bus PB, the pointer control circuit PC and the address bus AB as well as its address terminal A are only present in this control circuit CC1 and not in the other control circuits CC2 to CC8.

The subdivision of the memory MM into 8 sub-memories M1 to M8 which are themselves subdivided into 16 storage areas each associated to a transmitter circuit TC1/TC16 has the advantage of being easy to implement and of avoiding interactions between digital signals belonging to packets intended for different transmitter circuits TC1 to TC16. The congestion on one transmitter circuit TC1/TC16, due for instance to an overflow of its storage area, does not affect the operation of the other transmitter circuits. However, to avoid this congestion problem, the storage areas and thus also the whole memory MM are generally overdimensioned so that the size of the memory MM is larger than the one required for a particular application.

One solution to this congestion problem consists in using the memory MM as a common pool wherein the space reserved for each transmitter circuit TC1/TC16 may be dynamically allocated. However this would require additional control functions to load and unload the memory MM. Also broadcasting packets to a fixed number of transmitter circuits TC1 to TC16 would require an especially dedicated part of the memory MM wherein the packets remain stored until all the transmitter circuits TC1 to TC16 participating in the broadcast connection have read them. Also here additional control functions would be necessary. Furthermore, it is obvious that in these two last cases the memory MM could no longer be subdivided into identical sub-memories such as M1 to M8.

Consequently, it may be advantageous that the memory MM should be separate from the chip of the switching system since its size may then be independently adapted to the application.

Actually, the memory MM is no longer necessary when the bitrate at which the packets are transmitted by the transmitter circuits TC1 to TC16 via their respective output terminals T1 to T16 is sufficiently high to follow the rhythm at which these packets are received from the receiver circuits RC1 to RC16.

While the principles of the invention have been described above in connection with specific apparatus, it is to be clearly understood that this description is made only by way of example and not as a limitation on the scope of the invention.

**Claims**

1. Switching system (SW) including
   – a plurality of input terminals (R1 to R16) connected to receiver means (RC1 to RC16) able to receive packets of digital signals therefrom and to divide each of said packets into a plurality (8) of sub-packets;
   – control means (CC1 to CC8) to which at least one sub-packet of each of said packets and containing routing information is applied;
   – a plurality of memories (M1 to M8) allocated to respective sub-packets of each of said packets, said sub-packets being loaded into and unloaded from said memories under the control of said control means;
   – transmitter means (TC1 to TC16) which are connected to a plurality of output terminals (T1 to T16) and to which said unloaded sub-packets are supplied, said transmitter means being able to rebuild a packet from its sub-packets and to transmit said rebuilt packet to at least one terminal indicated by said routing information,
   characterized in that each of said memories (M1 to M8) is subdivided into a plurality (16) of storage areas allocated to respective ones of said output terminals (T1 to T16) and that said control means, under the control of said routing information, load the sub-packets of a packet to be transmitted to said indicated output terminal into the storage areas allocated thereto.

2. Switching system according to claim 1, characterized in that said control means (CC1 to CC8) include a first control circuit (CC1) to which said one sub-packet containing said routing information is applied from said receiver means (RC1 to RC16) and a plurality of second control circuits (CC2 to CC8) to which the remaining sub-packets of a packet are respectively applied from said receiver means (RC1 to RC16).

3. Switching system according to claim 2, characterized in that said first control circuit [CC1] is associated to one [M1] of said memories [M1 to M8] and that each of said second control circuits [CC2 to CC8] is associated to a respective memory [M2 to M8] of said plurality.

4. Switching system according to claim 1, characterized in that said plurality of memories [M1 to M8] are on a chip separated from the other circuits of said switching system [SW].

5. Switching system according to claim 1, characterized in that said plurality of sub-packets of a packet are loaded and unloaded simultaneously and in an homologous way into said respective storage areas.

6. Switching system [SW] according to claim 1, characterized in that said receiver means [RC1 to RC16] include a plurality of receiver circuits [RC1/16] to which a respective input terminal [R1/16] is connected and which are each able to divide a packet received from said connected input terminal into said plurality of sub-packets.

7. Switching system according to claims 2 and 6, characterized in that said first [CC1] and second [CC2 to CC8] control circuits each includes a plurality [16] of input buffer means [IL16] each able to latch a respective sub-packet received from said receiver circuits [RC1 to RC16] prior to loading it into the storage areas corresponding to said intended output terminal [T1/16].

8. Switching system according to claim 7, characterized in that said first control circuit [CC1] includes addressing means [L4, PB, PC, AB] able to extract from said routing information contained in said one sub-packet applied thereto the address of said intended output terminal [T1/16] and to indicate to said plurality of memories [M1 to M8] the location of the respective homologous storage areas into which the sub-packets of a packet latchet in the corresponding input buffer means [IL16] have to be loaded.

9. Switching system according to claim 8, characterized in that said addressing means [L4, PB, PC, AB] are able to indicate to said plurality of memories [M1 to M8] the location of the respective homologous storage areas from which the sub-packets of a packet have to be unloaded and transferred to corresponding output buffer means [OL16].

10. Switching system according to claim 1, characterized in that said transmitter means [TC1 to TC16] include a plurality of transmitter circuits [TC1 to TC16] each connected to a respective output terminal [T1/16] and to which the sub-packets of a packet unloaded from corresponding homologous storage areas of said memories [M1 to M8] are applied and which is able to rebuild a packet from its sub-packets.

11. Switching system according to the claims 2 and 1O, characterized in that said first [CC1]) and second [CC2 to CC8] control circuits each includes a plurality [16] of output buffer means [OL16] each able to latch a respective sub-packet unloaded from the storage area corresponding to said intended output terminal [T1/16] prior to transfer it to the corresponding transmitter circuit [TC1/16].

## Patentansprüche

1.  Durchschalteanlage (SW) mit:
    – einer Anzahl von Eingangsklemmen (R1-R16), die mit Empfangsmitteln (RC1-RC16) verbunden sind, die diese Pakete von digitalen Signalen empfangen und jedes dieser Pakete in eine Anzahl (8) von Teilpaketen unterteilen können;
    – Steuermitteln (CC1-CC8), an welche mindestens ein eine Leitweginformation enthaltendes Teilpaket jedes dieser Pakete angelegt wird;
    – einer Anzahl von den entsprechenden Teilpaketen jedes dieser Pakete zugeordneten Speichern (M1-M8), wobei die genannten Teilpakete unter der Steuerung der genannten Steuermittel in die Speicher eingeschrieben und ausgelesen werden;
    – Sendemitteln (TC1-TC16), welche mit einer Anzahl von Ausgangsklemmen (T1-T16) verbunden sind und an welche die ausgelesenen Teilpakete angelegt werden, wobei die genannten Sendemittel in der Lage sind, aus ihren Teil-paketen ein Paket neu zusammenzustellen und dieses neu zusammengestellte Paket an mindestens eine durch die genannte Leitweginformation angegebene Klemme zu übermitteln, dadurch gekennzeichnet, dass jeder der genannten Speicher (M1-M8) in eine Anzahl (16) von Speicherzonen aufgeteilt ist, welche entsprechenden der Ausgangsklemmen (T1-T16) zugeordnet sind, und das die genannten Steuermittel unter der Steuerung der genannten Leit-weginformation die Teilpakete eines an die genannte angegebene Ausgangsklemme zu übermittelnden Paketes in die ihr zugeordnete Speicherzone einschreiben.

2.  Durchschalteanlage nach Anspruch 1, dadurch gekennzeichnet, dass die genannten Steuermittel (CC1-CC8) eine erste Steuerschaltung (CC1) aufweisen, an welche das genannte eine, die Leitweginformation enthaltende Teilpaket von den genannten Empfängernmitteln (RC1-RC16) angelegt wird, und weiter eine Anzahl von zweiten Steuerschaltungen (CC2-CC8), an welche die verbleibenden Teilpakete eines Paketes von den genannten Empfängermitteln (RC1-RC16) angelegt werden.

3.  Durchschalteanlage nach Anspruch 2, dadurch gekennzeichnet, dass die genannte erste Steuerschaltung (CC1) einem (M1) der genannten Speicher (M1-M8) zugeordnet ist, und dass jede der zweiten Steuerschaltungen (CC2-CC8) einem entsprechenden Speicher (M2-M8) der genannten Anzahl von Speichern zugeordnet ist.

4.  Durchschalteanlage nach Anspruch 1, dadurch gekennzeichnet, dass die genannte Anzahl von Speichern (M1-M8) auf einen Chip angeordnet ist, welcher von den andern Schaltungen des Durchschaltesystems (SW) getrennt ist.

5.  Durchschalteanlage nach Anspruch 1, dadurch gekennzeichnet, dass die genannte Anzahl von Teilpaketen eines Paketes gleichzeitig und in homologer Art in die entsprechenden Speicherzonen eingeschrieben und ausgelesen wird.

6.  Durchschalteanlage (SW) nach Anspruch 1, dadurch gekennzeichnet, dass die genannten Empfängermittel (RC1-RC16) eine Anzahl von Empfängerschaltungen (RC1/16) aufweisen, mit welchen je eine Eingangsklemme (R1/16) verbunden ist und welche in der Lage sind, ein von einer angeschlossenen Eingangsklemme erhaltenes Paket in die genannte Anzahl von Teilpaketen zu unterteilen.

7.  Durchschalteanlage nach Anspruch 2 und 6, dadurch gekennzeichnet, dass die genannten ersten (CC1) und zweiten (CC2-CC8) Steuersschaltungen je eine Anzahl (16) von Eingangszwischenspeichermitteln (IL16) aufweisen, welche je in der Lage sind, ein von der genannten Empfängerschaltung (RC1-RC16) erhaltenes Teilpaket zu halten, bevor es in die Speicherzone eingeschrieben wird, welche der gewünschten Ausgangsklemme (T1/16) entspricht.

8. Durchschalteanlage nach Anspruch 7, dadurch gekennzeichnet, dass die erste Steuerschaltung (CC1) Adressiermittel (L4, PB, PC, AB) aufweist, die in der Lage sind, aus der im genannten einen daran angelegten Teilpaket, welches die Leitweginformation enthält, die Adresse der gewünschten Ausgangsklemme (P1/16) zu entnehmen und der genannten Anzahl von Speichern (M1-M8) den Speicherplatz der entsprechenden homologen Speicherzone anzugeben, in welche die Teilpakete eines in den entsprechenden Eingangszwischenspeichermitteln (IL16) gespeicherten Paketes einzuschreiben sind.

9. Durchschalteanlage nach Anspruch 8, dadurch gekennzeichnet, dass die genannten Adressiermittel (L4, PD, PC, AB) in der Lage sind, der genannten Anzahl von Speichern (M1-M8) den Platz der entsprechenden homologen Speicherzone anzugeben, aus welcher die Teilpakete eines Paketes auszulesen und an die entsprechenden Ausgangszwischenspeichermittel (0L16) zu transferieren sind.

10. Durchschalteanlage nach Anspruch 1, dadurch gekennzeichnet, dass die genannten Sendemittel (TC1 bis TC16) eine Anzahl von Sendeschaltungen (TC1-TC16) aufweisen, die je mit einer entsprechenden Ausgangsklemme (T1/16) gekoppelt sind und an welche die Teilpakete eines aus der entsprechenden homologen Speicherzone der genannten Speicher (M1-M8) auszulesenden Paketes angelegt werden und welche in der Lage sind, aus ihren Teilpaketen ein Paket neu aufzubauen.

11. Durchschalteanlage nach Anspruch 2 und 1O, dadurch gekennzeichnet, dass die genannten ersten (CC1) und zweiten (CC2-CC8) Steuermittel je eine Anzahl (16) von Ausgangszwischenspeichermitteln (OL16) aufweisen, die je in der Lage sind, ein aus der der gewünschten Ausgangsklemme (T1/16) entsprechenden Speicherzone ausgelesenes Teilpaket zu speichern, bevor es an die entsprechende Sendeschaltung (PC1/16) übertragen wird.

**Revendications**

1. Système de commutation (SW) comprenant :
   – une pluralité de bornes d'entrée (R1 à R16) connectées à des moyens de réception (RC1 à RC16) capables de recevoir des paquets de signaux numériques en provenance desdites bornes, et de diviser chacun desdits paquets en une pluralité (8) de sous-paquets;
   – des moyens de commande (CC1 à CC8) auxquels est appliqué au moins un sous-paquet de chacun desdits paquets ci-dessus et contenant des informations d'acheminement;
   – une pluralité de mémoires (M1 à M8) affectées aux sous-paquets correspondants de chacun desdits paquets, lesdits sous-paquets étant emmagasinés dans et extraits desdites mémoires sous le contrôle desdits moyens de commande;
   – des moyens de transmission (TC1 à TC16) connectés à une pluralité de bornes de sortie (T1 à T16) et auxquels sont fournis lesdits sous-paquets extraits, lesdits moyens de transmission étant capables de reconstituer un paquet à partir de ses sous-paquets et de transmettre le paquet ainsi reconstitué à au moins une borne indiquée par ladite information d'acheminement, caractérisé en ce que chacune desdites mémoires (M1à M8) est subdivisée en une pluralité (16) de zones de stockage affectées à des bornes correspondantes auxdites bornes de sortie (T1 à T16) et que lesdits moyens de commande, sous le contrôle de ladite information d'acheminement, emmagasinent les sous-paquets d'un paquet à transmettre à ladite borne de sortie indiquée, dans les zones de stockage associées à cette borne.

2. Système de commutation conformément à la revendication 1, caractérisé en ce que lesdits moyens de commande (CC1 à CC8) comprennent un premier circuit de commande (CC1) auquel est appliqué ledit sous-paquet contenant ladite information d'acheminement provenant desdits moyens de réception (RC1 à RC16) et une pluralité de seconds circuits de commande (CC2 à CC8) auxquels sont respectivement appliqués les sous-paquets restants provenant desdits moyens de réception (RC1 à RC16).

3. Système de commutation conformément à la revendication 2, caractérisé en ce que ledit premier circuit de commande (CC1) est associé à l'une (M1) desdites mémoires (M1 à M8) et que chacun desdits seconds circuits de commande (CC2 à CC8) est associé à une mémoire correspondante (M2 à M8) de ladite pluralité.

4. Système de commutation conformément à la revendication 1, caractérisé en ce que ladite pluralité de mémoires (M1 à M8) sont implantées sur une puce séparée des autres circuits dudit système de commutation (SW).

5. Système de commutation conformément à la revendication 1, caractérisé en ce que ladite pluralité de sous-paquets d'un paquet sont emmagasinés et extraits simultanément et d'une manière similaire dans lesdites zones de stockage correspondantes.

6. Système de commutation (SW) conformément à la revendication 1, caractérisé en ce que lesdits moyens de réception (RC1 à RC16) comprennent une pluralité de circuits de réception (RC1/16) auxquels est connectée une borne d'entrée correspondante (R1/16) et qui sont chacun en mesure de diviser un paquet provenant de ladite borne d'entrée connectée en ladite pluralité de sous-paquets.

7. Système de commutation conformément aux revendications 2 et 6, caractérisé en ce que ledit premier circuit de commande (CC1) et lesdits seconds circuits de commande (CC2 à CC8) comprennent chacun une pluralité (16) de tampons d'entrée (IL16), chacun pouvant retenir un sous-paquet correspondant provenant desdits circuits de réception (RC1 à RC16) avant de l'emmagasiner dans les zones de stockage correspondant à ladite borne de sortie associée (T1/16).

8. Système de commutation (SW) conformément à la revendication 7, caractérisé en ce que ledit premier circuit de commande (CC1) comprend des moyens d'adressage (L4, PB, PC, AB) capables d'extraire de ladite information d'acheminement contenue dans ledit sous-paquet qui y est appliqué, l'adresse de ladite borne de sortie associée (T1/16) et d'indiquer à ladite pluralité de mémoires (M1 à M8) la position des zones de stockage similaires correspondantes dans lesquelles doivent être emmagasinés les sous-paquets d'un paquet retenu dans les tampons d'entrée correspondants (IL16).

9. Système de commutation conformément à la revendication 8, caractérisé en ce que lesdits moyens d'adressage (L4, PB, PC, AB) sont en mesure d'indiquer à ladite pluralité de mémoires (M1 à M8) la position des zones de stockage similaires correspondantes d'où les sous-paquets d'un paquet doivent être extraits et transférés vers les tampons de sortie correspondants (OL16).

10. Système de commutation conformément à la revendication 1, caractérisé en ce que lesdits moyens de transmission (TC1 à TC16) comprennent une pluralité de circuits de transmission (TC1 à TC16) chacun étant connecté à une borne de sortie correspondante (T1/16) et auxquels sont appliqués les sous-paquets d'un paquet extrait des zones de stockage similaires correspondantes desdites mémoires (M1 à M8) et qui sont en mesure de reconstituer un paquet à partir de ses sous-paquets.

11. Système de commutation conformément aux revendications 2 et 1O, caractérisé en ce que ledit premier circuit de commande (CC1) et lesdits seconds circuits de commande (CC2 à CC8) comprennent chacun une pluralité (16) de tampons de sortie (OL16), chacun étant capable de retenir un sous-paquet correspondant extrait de la zone de stockage correspondant à ladite borne de sortie associée (T1/16), avant de le transférer au circuit de transmission correspondant (TC1/16).

FIG.1
SW

EP 0 357 618 B1

FIG.2